# EUROPEAN PATENT SPECIFICATION

(11) **EP 0 963 308 B1**
(45) Date of publication and mention of the grant of the patent: **03.07.2002**
(21) Application number: 98907309.3
(22) Date of filing: 23.02.1998
(51) Int. Cl.: B60R 5/04, B60R 13/01

(54) **LOADING MAT**
LADEMATTE
TAPIS DE CHARGEMENT

(30) Priority: 26.02.1997 SE 9700682
(43) Date of publication of application: 15.12.1999
(73) Proprietor: Collins & Aikman Automotive Systems AB, 450 63 Högsäter (SE)
(72) Inventor: RÖSSLE, Hans, S-461 58 Trollhättan (SE); JOHANSSON, Michael, S-451 91 Uddevalla (SE); ANDERSSON, Björn, S-458 40 Ödeborg (SE)
(74) Representative: HOFFMANN - EITLE
(86) International application number: SE9800315
(87) International publication number: WO9838065

(56) References cited:
- WO-A-82/02175
- US-A- 2 788 137
- US-A- 2 797 828
- US-A- 2 911 253
- US-A- 3 132 755
- US-A- 5 167 433
- US-A- 5 683 132

## Description

The present invention relates to a loading mat for a floor of a luggage compartment of a vehicle, preferably a vehicle of the type combi-coupé, station wagon or minibus.

The luggage compartments of modern private cars are often constructed with highly opening boots and a low or now loading edge in order to improve the ergonomics at loading or unloading. However, a person who is loading or unloading is still subjected to very high strains especially in respect of his back, when heavy goods are placed far into the luggage compartment. As in addition the floor covering material or mats placed on the floor are almost without exception made of a material such as rubber or a needle-loom like material it is virtually impossible to push in or pull out heavy goods. Moreover, you easily get dirty since it is almost impossible to reach out for something placed far into the luggage compartment of the vehicle without touching the back bumper of the vehicle with your legs.

According to the present invention the above problems have been solved by production of a mobile loading mat for the luggage compartment of a vehicle. The pull-out loading mat is preferably used for private cars of the type station wagon or combi-coupé but it can also be used for minibuses, so-called pick-ups and vans.

Thus, the invention relates to a loading mat intended to be placed on the floor in the luggage compartment of a vehicle, preferably a vehicle of the type combi-coupé, station wagon or minibus. The invention is characterized in that the loading mat has an upper side and an under side, that the loading mat is provided with a stiff base layer which gives the mat such a stiffness that allows the mat to be pushed into respectively pulled out of the luggage compartment. The under side, which possibly constitutes the base layer and has a low friction against the floor of the luggage compartment and it is preferably glossy.

Suitably the loading mat is furnished with a folding line in the cross direction of the vehicle so that the back part of the loading mat can be folded down over the bumper of the vehicle when the mat has been partly pulled out of the luggage compartment. In this way the legs can be protected against dirt in connection with loading and unloading. The back part of the loading mat which can be folded down suitably constitutes less than half of the total area of the loading mat.

The back part of the loading mat is preferably at its back edge part provided with a hand grip such as a handle hole for instance. Also the side parts of the loading mat can suitably be provided with a hand grip such as a handle hole for instance. In this way the loading mat can be used for carrying goods, which use is similar to a stretcher.

The upper side of the loading mat is suitably made of a material with a high friction such as rubber, a thermoplastic elastomer or a felt like material, so that the goods loaded thereon stands steadily without sliding around in connection with driving. In order to further decrease the risk of sliding goods, the loading mat can suitably be furnished with upwards directed edges at least at two sides.

The loading mat can also suitably be provided with means for anchoring. By these means the goods can be tied in the loading mat or the loading mat can per se be anchored in load anchoring loops in the luggage compartment. The last mentioned measure is especially important from the view point of safety if you want to transport with a down folded back seat which is a possibility available in most modern vehicles of the above mentioned type. The anchoring means can suitably be holes or loops placed on the loading mat in connection to the tieing or anchoring loops in the luggage department when the loading mat is placed in its inner position. The tieing loops and the holes and loops respectively can then be joined together by means of snap-hooks.

Preferably the base layer is made of massive wood, laminated wood, sheet metal, a thermoplast or a thermoset to which plastics possibly a reinforcing material such as glass fibres, steel fibres, aramid fibre or carbon fibres have been added. At the materials which are naturally glossy the under side can be left untreated. However, materials which are rough or tend to become rough after some time of use the under side must be treated to keep the glossy properties. Suitable treatments can be glueing a material with the desired properties on the under side or lacquering.

The width of the loading mat can correspond to the whole or a part of the width of the floor of the luggage compartment. By letting a loading mat constitute only a part of the width of the floor of the luggage compartment the remaining part of the floor of the luggage compartment can be used in a traditional way.

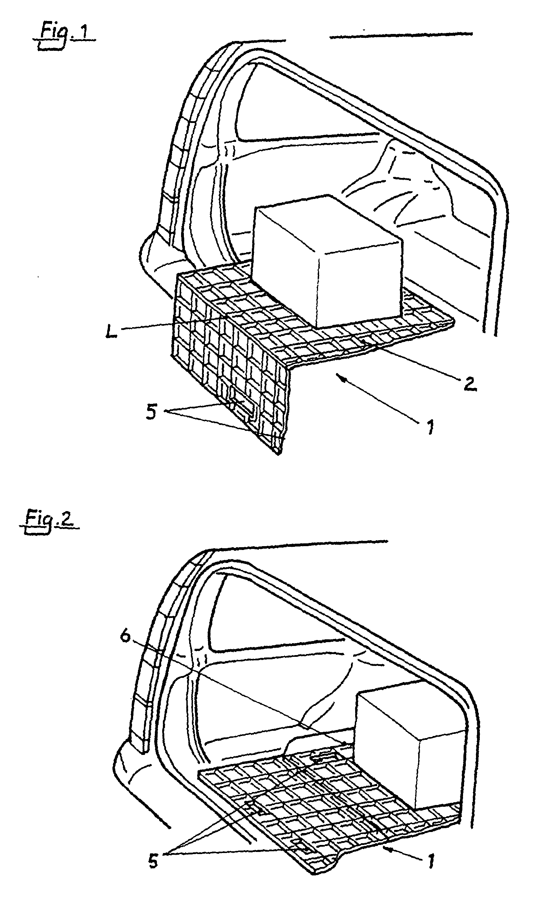

The invention is explained further in connection with the enclosed figures whereby figure 1 shows a perspective view of the back part of a vehicle with a luggage compartment provided with an embodiment of a loading mat according to the invention, which mat is shown in a partly pulled out position.

Figure 2 shows a perspective view of the back part of a vehicle with a luggage compartment provided with a second embodiment of a loading mat according to the invention, which mat is shown in an inserted position.

Figure 3 shows in cross section a part of a loading mat according to the invention.

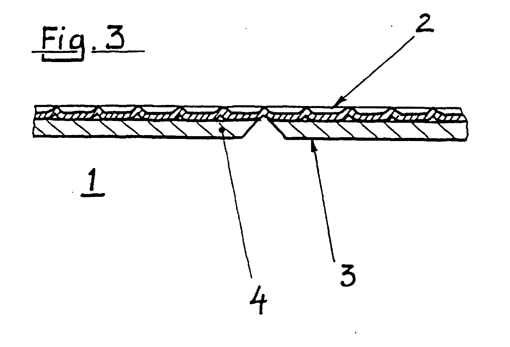

Figure 1 shows in a perspective view the back part of a vehicle with a luggage compartment provided with a loading mat 1. The loading mat 1 has an upper side 2 and an under side 3 (Figure 3).

The loading mat 1 is provided with a stiff base layer 4 (Figure 3) which allows the loading mat 1 to be pushed into respectively pulled out of the luggage compartment. The under side 3 which constitutes the base layer 4 is glossy and has a low friction against the floor of the luggage compartment. Moreover, the loading mat 1 is furnished with a folding line L in the cross direction of the vehicle so that the back part of the loading mat 1 can be folded down over the bumper of the vehicle when the loading mat 1 had been partly pulled out of the luggage compartment. The upper side 2 is made of thermoplastic elastomer with a high friction. The back part of the loading mat 1 is at its back edge part provided with a hand grip 5 in the form of a handle hole. The base layer 4 is made of a stiff thermoplastic.

Figure 2 shows a second embodiment of a loading mat 1 in an inserted position. This embodiment mainly corresponds to that shown in figure 1. However, here also the side parts 6 are provided with a hand grip 5 in the form of handle holes. Furthermore, the loading mat 1 has upwards directed edges at three sides.

Figure 3 shows in cross section a part of a loading mat 1 with a base layer 4, an under side 3 and an upper side 2.

## Claims

1. Loading mat (1) for a floor of a luggage compartment of a vehicle, preferably a vehicle of the type combi-coupé, station wagon or mini bus, wherein the loading mat(1) has an upper side (2) and an under side (3), that the loading mat(1) is provided with a stiff base layer (4) which gives the mat (1) such stiffness, at least in the longitudinal direction of the vehicle, that allows the mat (1) to be pushed into respectively pulled out of the luggage compartment, that the under side (3) which constitutes the base layer (4) has a low friction against the floor of the luggage compartment, and that the loading mat (1) is provided with a folding line (L) in the cross direction of the vehicle so that the back part of the mat (1) can be folded down over the bumper of the vehicle when the mat (1) has been partly pulled out of the luggage compartment.

2. Loading mat (1) according to claim 1 or 2, wherein the upper side (2) consists of a material with a high friction such as rubber, a thermoplastic elastomer or a feltlike material.

3. Loading mat (1) according to any one of claims 1-3, wherein the back part of the mat (1) at its back edge part is provided with a hand grip (5) such as a handle hole for instance.

4. Loading mat (1) according to any one of claims 1-4, wherein its side parts (6) are provided with a hand grip (5), such as a handle hole for instance.

5. Loading mat (1) according to any one of claims 1-5, wherein it is provided with upwards directed edges at least at two sides.

6. Loading mat (1) according to any one of claims 1-6, wherein the base layer (4) is made for instance of massive wood, laminated wood, sheet metal, a thermoplast or a thermoset, to which plastics optionally a reinforcing material such as glass fibres steel fibres, aramid fibres or carbon fibres have been added.

7. Loading mat (1) according to any one of claims 1-7 wherein it is provided with anchoring means.

8. Loading mat (1) according to any one of claims 1-8 wherein its width corresponds to the whole width or a part of the width of the floor of the luggage compartment

9. Loading mat (1) according to any one of claims 1-9, wherein the base layer is glossy.

## Patentansprüche

1. Ladematte (1) für einen Boden eines Gepäckabteils eines Fahrzeugs, bevorzugt eines Fahrzeugs des Typs Kombi-Coupé, Stationwagon oder Minibus, worin die Ladematte (1) eine Oberseite (2) und Unterseite (3) besitzt, dass die Ladematte (1) mit einer steifen Basisschicht (4) ausgestattet ist, die der Matte (1) eine solche Steifigkeit verleiht, zumindest in Längsrichtung des Fahrzeugs, die es der Matte (1) erlaubt, in das Gepäckabteil geschoben bzw. aus diesem herausgezogen zu werden, dass die Unterseite (3), welche die Basisschicht (4) bildet, eine geringe Reibung gegenüber dem Boden des Gepäckabteils besitzt, und dass die Ladematte (1) mit einer Faltlinie (L) in Querrichtung des Fahrzeugs ausgestattet ist, so dass der hintere Teil der Matte (1) über der Stoßstange des Fahrzeugs nach unten gefaltet sein kann, wenn die Matte (1) teilweise aus dem Gepäckabteil herausgezogen ist.

2. Ladematte (1) nach Anspruch 1, worin die Oberseite (2) aus einem Material mit einer hohen Reibung wie Gummi, einem thermoplastischen Elastomer oder einem filzartigen Material besteht.

3. Ladematte (1) nach Anspruch 1 oder 2, worin der hintere Teil der Matte (1) an seinem hinteren Kantenteil mit einem Handgriff (5) wie beispielsweise einem Griffloch ausgestattet ist.

4. Ladematte (1) nach einem der Ansprüche 1 bis 3, worin deren Seitenteile (6) mit einem Handgriff (5) wie beispielsweise einem Griffloch ausgestattet sind.

5. Ladematte (1) nach einem der Ansprüche 1 bis 4, worin diese mit nach oben gerichteten Kanten auf zumindest zwei Seiten ausgestattet ist.

6. Ladematte (1) nach einem der Ansprüche 1 bis 5, worin die Basisschicht (4) beispielsweise aus massivem Holz, laminiertem Holz, Blech, einem Thermoplasten oder einem Duroplast, zu welchen Kunststoffen optional ein Verstärkungsmaterial wie Glasfasern, Stahlfasern, Aramidfasern oder Karbonfasern zugefügt sind, hergestellt ist.

7. Ladematte (1) nach einem der Ansprüche 1 bis 6, worin diese mit Verankerungseinrichtungen ausgestattet ist.

8. Ladematte (1) nach einem der Ansprüche 1 bis 7, worin deren Breite der Gesamtbreite oder einem Teil der Breite des Bodens des Gepäckabteils entspricht.

9. Ladematte (1) nach einem der Ansprüche 1 bis 8, worin die Basisschicht glatt ist.

## Revendications

1. Tapis de chargement (1) pour un plancher d'un coffre d'un véhicule, de préférence un véhicule du type coupé fourgonnette, break ou minibus, dans lequel le tapis de chargement (1) comprend un côté supérieur (2) et un côté inférieur (3), **caractérisé en ce que** le tapis de chargement (1) est muni d'une couche de base rigide (4) qui lui confère une rigidité telle que, au moins dans la direction longitudinale du véhicule, le tapis (1) peut être, respectivement, poussé dans et tiré hors du coffre, **en ce que** le côté inférieur (3), qui constitue la couche de base, présente un faible frottement sur le plancher du coffre, et **en ce que** le tapis de chargement (1) comprend une ligne de pliage (L) dans la direction transversale du véhicule afin que la partie arrière du tapis (1) puisse être repliée sur le pare-chocs du véhicule lorsque le tapis (1) a été partiellement tiré hors du coffre.

2. Tapis de chargement (1) selon la revendication 1, dans lequel le côté supérieur (2) est constitué d'un matériau présentant un haut degré de frottement, comme du caoutchouc, un élastomère thermoplastique ou un matériau de type feutre.

3. Tapis de chargement (1) selon la revendication 1 ou 2, dans lequel la partie arrière du tapis (1) est munie, au niveau de sa partie de bord arrière, d'une poignée (5), comme par exemple un trou de préhension.

4. Tapis de chargement (1) selon l'une quelconque des revendications 1 à 3, dans lequel ses parties latérales (6) sont munies d'une poignée (5), comme par exemple un trou de préhension.

5. Tapis de chargement (1) selon l'une quelconque des revendications 1 à 4, dans lequel le tapis est pourvu de bords dirigés vers le haut sur au moins deux côtés.

6. Tapis de chargement (1) selon l'une quelconque des revendications 1 à 5, dans lequel la couche de base (4) est constituée, par exemple, de bois massif, de bois lamellé, de tôle, d'une matière thermoplastique ou thermodurcie, matière plastique sur laquelle, en option, un matériau de renforcement, comme des fibres de verre, des fibres d'acier, des fibres aramides ou des fibres de carbone, a été ajouté.

7. Tapis de chargement (1) selon l'une quelconque des revendications 1 à 6, dans lequel le tapis est pourvu de moyens de fixation.

8. Tapis de chargement (1) selon l'une quelconque des revendications 1 à 7, dans lequel sa largeur correspond à la largeur totale ou à une partie de la largeur du plancher du coffre.

9. Tapis de chargement (1) selon l'une quelconque des revendications 1 à 8, dans lequel la couche de base est brillante.
